# EUROPEAN PATENT APPLICATION

(11) **EP 4 844 729 A1**
(43) Date of publication of application: **25.11.2026**
(21) Application number: 24925503.5
(22) Date of filing: 24.09.2024
(51) Int. Cl.: G08G 1/16, B60W 30/09, B60W 30/095, B60W 60/00

(54) **CONTROL METHOD AND APPARATUS, AND INTELLIGENT DRIVING DEVICE**

(30) Priority: 23.02.2024 CN 202410204899
(71) Applicant: Yinwang Intelligent Technologies Co., Ltd., Shenzhen, Guangdong 518110 (CN)
(72) Inventor: GU, Dajing, Shenzhen, Guangdong 518110 (CN); XIANG, Yunfeng, Shenzhen, Guangdong 518110 (CN); ZHANG, Ziqi, Shenzhen, Guangdong 518110 (CN); MENG, Han, Shenzhen, Guangdong 518110 (CN)
(74) Representative: Gill Jennings & Every LLP
(86) International application number: PCT/CN2024/120640
(87) International publication number: WO 2025/175763

(57) **Abstract**

A control method is provided. The method includes: controlling, based on location information and vehicle door information of a target vehicle, a lateral offset of an intelligent driving device in a direction away from a target vehicle door, and/or a longitudinal velocity of the intelligent driving device. The target vehicle door is located on a side that is of the target vehicle and that is close to the intelligent driving device, and the vehicle door information indicates at least one of the following: opening duration of the target vehicle door of the target vehicle or a detection result of a driver or passenger at the target vehicle door. The control method may be applied to the field of intelligent vehicles such as electric vehicles and new energy vehicles. In a scenario in which a vehicle door of a front vehicle is opened, the vehicle can be controlled to implement lateral avoidance and/or longitudinal braking to different degrees. This helps improve driving safety and driving or riding experience of a user of the vehicle. A control apparatus and an intelligent driving device are further provided.

## Description

This application claims priority to Chinese Patent Application No. 202410204899.2, filed with the China National Intellectual Property Administration on February 23, 2024 and entitled "CONTROL METHOD AND APPARATUS, AND INTELLIGENT DRIVING DEVICE", which is incorporated herein by reference in its entirety.

### TECHNICAL FIELD

This application relates to the field of intelligent driving, and more specifically, to a control method and apparatus, and an intelligent driving device.

### BACKGROUND

As vehicles develop toward intelligence and automation, more vehicles use intelligent driving technologies. A vehicle configured with an intelligent driving function may evaluate a motion status and a pose of a surrounding vehicle, and formulate a corresponding planning and driving policy.

However, for a scenario in which a vehicle door of a front vehicle is opened, the current planning and driving policy with the intelligent driving function is not perfect, resulting in poor driving or riding experience of a driver or passenger and even resulting in a collision due to untimely avoidance.

In view of this, in the scenario in which the vehicle door of the front vehicle is opened, a control solution that can improve vehicle safety and driving or riding experience urgently needs to be developed.

### SUMMARY

This application provides a control method and apparatus, and an intelligent driving device, to control an ego vehicle to avoid an obstacle at different velocities or lateral offsets in a scenario in which a vehicle door of a front vehicle is opened.

According to a first aspect, a control method is provided. The method may be performed by an intelligent driving device or a component (for example, a chip or a chip system) of the intelligent driving device. The method includes: obtaining location information and vehicle door information of a target vehicle, where the vehicle door information indicates at least one of the following: opening duration of a target vehicle door of the target vehicle or a detection result of a driver or passenger at the target vehicle door, where the target vehicle door is located on a side that is of the target vehicle and that is close to the intelligent driving device; and controlling, based on the location information and the vehicle door information, a lateral offset of the intelligent driving device in a direction away from the target vehicle door, and/or a longitudinal velocity of the intelligent driving device.

It may be understood that, if a driver or passenger is detected at the opened target vehicle door, there is a high probability that the driver or passenger gets off; and when the intelligent driving device does not perform lateral avoidance or longitudinal braking in advance, it is very likely that the intelligent driving device collides with the driver or passenger. Even if no driver or passenger is detected at the opened target vehicle door, there is still a possibility that the driver or passenger suddenly gets off from the target vehicle door. When no driver or passenger is detected at the opened target vehicle door, the opening duration of the vehicle door can reflect, to some extent, a possibility that a driver or passenger may appear at the vehicle door. Therefore, based on the opening duration of the vehicle door and/or a detection result of the driver or passenger, the intelligent driving device is controlled to perform lateral avoidance or longitudinal braking to different degrees, reducing a collision probability, and improving safety of the intelligent driving device; and the intelligent driving device would not overreact (for example, sudden braking) to a scenario the vehicle door of the front vehicle is opened. This helps improve driving or riding experience of a user of the intelligent driving device.

With reference to the first aspect, in some implementations of the first aspect, controlling, based on the location information and the vehicle door information, the lateral offset of the intelligent driving device in the direction away from the target vehicle door includes: determining a lateral distance between the target vehicle and the intelligent driving device based on the location information; and when the lateral distance is less than or equal to a first distance threshold, performing any one of the following: when the opening duration of the target vehicle door is greater than or equal to a first duration threshold, controlling the intelligent driving device to offset by a first lateral offset; when the opening duration of the target vehicle door is less than the first duration threshold, controlling the intelligent driving device to offset by a second lateral offset; when a driver or passenger is detected at the target vehicle door, controlling the intelligent driving device to offset by a third lateral offset; or when no driver or passenger is detected at the target vehicle door, controlling the intelligent driving device to offset by a fourth lateral offset. The second lateral offset is greater than the first lateral offset, and the third lateral offset is greater than the fourth lateral offset.

In some implementations, the third lateral offset is greater than or equal to the second lateral offset.

During actual implementation, the driver or passenger may be detected when the opening duration of the target vehicle door is greater than or equal to the first duration threshold. In this case, the lateral offset is subject to a larger value, that is, the intelligent driving device is controlled to offset by the third lateral offset.

In some implementations, when a driver or passenger is detected at the target vehicle door and it is determined that the driver or passenger tends to get off, the intelligent driving device is controlled to offset by the third lateral offset.

In the foregoing technical solution, when the opening duration of the vehicle door is less than the first duration threshold, or when a driver or passenger is detected, the intelligent driving device is controlled to offset in the direction away from the target vehicle door by a larger offset, to reserve sufficient space for a driver or passenger who may get off, to reduce a probability of collision with the driver or passenger.

With reference to the first aspect, in some implementations of the first aspect, the target vehicle is located diagonally ahead of the intelligent driving device.

In some implementations, when the target vehicle is located right ahead of the intelligent driving device, the intelligent driving device may be controlled not to perform lateral offset, but to perform only longitudinal braking. In other words, the lateral offset of the intelligent driving device in the direction away from the target vehicle door is controlled to be zero.

With reference to the first aspect, in some implementations of the first aspect, the method further includes: obtaining information about an obstacle on a side that is of the intelligent driving device and that is away from the target vehicle door. Controlling, based on the location information and the vehicle door information, the lateral offset of the intelligent driving device in the direction away from the target vehicle door includes: controlling the lateral offset based on the information about the obstacle, the location information, and the vehicle door information.

In some implementations, a lateral offset corresponding to a case in which there is an obstacle on the side that is of the intelligent driving device and that is away from the target vehicle door is less than a lateral offset corresponding to a case in which there is no obstacle on the side that is of the intelligent driving device and that is away from the target vehicle door.

In the foregoing technical solution, the lateral offset of the intelligent driving device is controlled based on the obstacle status on the side away from the target vehicle door, so that a probability that the intelligent driving device collides with the obstacle on the target offset side when the intelligent driving device avoiding the front vehicle whose vehicle door is opened in front of the intelligent driving device can be reduced. This helps improve driving safety.

With reference to the third aspect, in some implementations of the third aspect, the information about the obstacle further includes an obstacle type, and the obstacle type includes a dynamic obstacle and/or a static obstacle. Controlling a lateral offset based on the information about the obstacle, the location information, and the vehicle door information includes: when the obstacle type indicates that the obstacle located on the side that is of the intelligent driving device and that is away from the target vehicle door is the dynamic obstacle, control the intelligent driving device to offset by a fifth lateral offset; and when the obstacle type indicates that the obstacle located on the side that is of the intelligent driving device and that is away from the target vehicle door is the static obstacle, control the intelligent driving device to offset by a sixth lateral offset. The fifth lateral offset is greater than the sixth lateral offset.

In some implementations, when the lateral distance between the static obstacle and the intelligent driving device is excessively short, and the lateral space of the intelligent driving device is limited, the sixth lateral offset may be zero.

In the foregoing technical solution, the lateral offset of the intelligent driving device is controlled based on the type of the obstacle located on the side that is of the intelligent driving device and that is away from the target vehicle door. This helps cope with a more complex scenario, and helps improve flexibility and intelligence of the intelligent driving device when the intelligent driving device avoids a front vehicle whose vehicle door is opened.

With reference to the first aspect, in some implementations of the first aspect, controlling the longitudinal velocity of the intelligent driving device based on the location information and the vehicle door information includes at least one of the following: when the opening duration of the target vehicle door is greater than or equal to the first duration threshold, controlling the intelligent driving device to travel at a first longitudinal deceleration; when the opening duration of the target vehicle door is less than the first duration threshold, controlling the intelligent driving device to travel at a second longitudinal deceleration; when a driver or passenger is detected at the target vehicle door, controlling the intelligent driving device to travel at a third longitudinal deceleration; or when no driver or passenger is detected at the target vehicle door, controlling the intelligent driving device to travel at a fourth longitudinal deceleration. The second longitudinal deceleration is greater than the first longitudinal deceleration, and the third longitudinal deceleration is greater than the fourth longitudinal deceleration.

In some implementations, the longitudinal velocity of the intelligent driving device is determined based on the real-time velocity of the intelligent driving device. It may be understood that a value relationship between the second longitudinal deceleration and the first longitudinal deceleration, and a value relationship between the third longitudinal deceleration and the fourth longitudinal deceleration are value relationships on a premise that other conditions (such as the initial velocity of the intelligent driving device, the lateral distance between the target vehicle and the intelligent driving device, and the information about the obstacle that is on the side of the target vehicle door and that is away from the intelligent driving device) are the same.

In some implementations, the third longitudinal deceleration is greater than or equal to the second longitudinal deceleration. During actual implementation, if a driver or passenger is detected when the opening duration of the target vehicle door is greater than or equal to the first duration threshold, a larger value is used for longitudinal deceleration, that is, the intelligent driving device is controlled to travel at the third longitudinal deceleration.

In the foregoing technical solution, when the opening duration of the vehicle door is less than the first duration threshold, or when a driver or passenger is detected, the intelligent driving device is controlled to decelerate in advance through a larger deceleration. This helps reduce a probability that the intelligent driving device suddenly brakes when approaching the target vehicle, and can improve safety and driving or riding experience.

With reference to the first aspect, in some implementations of the first aspect, controlling the longitudinal velocity of the intelligent driving device based on the location information and the vehicle door information includes at least one of the following: when opening duration of the target vehicle door is greater than or equal to the first duration threshold, controlling the intelligent driving device to travel at a first velocity; when the opening duration of the target vehicle door is less than the first duration threshold, controlling the intelligent driving device to travel at a second velocity; when a driver or passenger is detected at the target vehicle door, controlling the intelligent driving device to travel at a third velocity; or when no driver or passenger is detected at the target vehicle door, controlling the intelligent driving device to travel at a fourth velocity. The second velocity is less than the first velocity, and the third velocity is less than the fourth velocity.

In some implementations, the first velocity to the fourth velocity each may be an average velocity of the intelligent driving device per unit distance.

In some implementations, the third velocity is less than or equal to the second velocity. During actual implementation, if a driver or passenger is detected when the opening duration of the target vehicle door is greater than or equal to the first duration threshold, a smaller value is used for longitudinal velocity, that is, the intelligent driving device is controlled to travel at the third velocity.

In the foregoing technical solution, when the opening duration of the vehicle door is less than the first duration threshold, or when a driver or passenger is detected, the intelligent driving device is controlled to travel and decelerate at a slower velocity, so that the intelligent driving device does not suddenly brake, improving safety and driving or riding experience.

With reference to the first aspect, in some implementations of the first aspect, controlling the longitudinal velocity of the intelligent driving device based on the location information and the vehicle door information includes: when there is the obstacle on the side that is of the intelligent driving device and that is away from the target vehicle door, controlling the intelligent driving device to travel at a fifth longitudinal deceleration or a fifth velocity; or when there is no obstacle on the side that is of the intelligent driving device and that is away from the target vehicle door, controlling the intelligent driving device to travel at a sixth longitudinal deceleration or a sixth velocity. The fifth longitudinal deceleration is greater than the sixth longitudinal deceleration, and the fifth velocity is less than the sixth velocity.

In some implementations, the fifth velocity and the sixth velocity each are an average velocity of the intelligent driving device per unit distance.

In some implementations, when there is an obstacle on the side that is of the intelligent driving device and that is away from the target vehicle door, and a lateral distance between the obstacle and the intelligent driving device is less than or equal to a second distance threshold, the intelligent driving device is controlled to travel at the fifth longitudinal deceleration or the fifth velocity; or when there is an obstacle on the side that is of the intelligent driving device and that is away from the target vehicle door, and a lateral distance between the obstacle and the intelligent driving device is greater than a second distance threshold, the intelligent driving device is controlled to travel at the sixth longitudinal deceleration or the sixth velocity.

In the foregoing technical solution, when there is an obstacle on the side that is of the intelligent driving device and that is away from the target vehicle door, the intelligent driving device is controlled to travel at a low velocity or a large deceleration, so that in an emergency (for example, a driver or passenger suddenly exit the target vehicle door), the intelligent driving device can have sufficient reaction time and space. This helps further improve driving safety and driving or riding experience.

With reference to the first aspect, in some implementations of the first aspect, the method further includes: controlling a prompt apparatus to prompt at least one of the following: opening of the target vehicle door; a detection result; or an obstacle avoidance path, where the obstacle avoidance path is determined based on the lateral offset and the longitudinal velocity.

In the foregoing technical solution, the prompt apparatus prompts the risk, so that the driver or passenger and the passenger pay attention to the risk, and a specific psychological expectation is generated for a subsequent avoidance behavior of the intelligent driving device. This helps improve driving or riding experience.

According to a second aspect, a control method is provided. The method may include: determining a collision risk level based on opening duration of a target vehicle door of a target vehicle and/or a detection result of a driver or passenger at the target vehicle door, and a lateral distance between the target vehicle and an intelligent driving device, where the target vehicle door is located on a side that is of the target vehicle and that is close to the intelligent driving device; and controlling a lateral offset and a longitudinal velocity of the intelligent driving device based on the collision risk level.

It should be noted that the collision risk level may indicate a collision risk between the intelligent driving device and the target vehicle door, or may indicate a collision risk between the intelligent driving device and a driver or passenger who leaves or gets off from the target vehicle door.

With reference to the second aspect, in some implementations of the second aspect, a collision risk level corresponding to a first lateral distance includes a first level and a second level. The first level is associated with first opening duration and/or a first detection result, the second level is associated with second opening duration and/or a second detection result, the first opening duration is greater than or less than the second opening duration, the first detection result indicates that a driver or passenger is detected at the target vehicle door, and the second detection result indicates that no driver or passenger is detected at the target vehicle door.

Controlling, based on the collision risk level, the lateral offset and the longitudinal velocity of the intelligent driving device includes: when the collision risk level is the first level, controlling the intelligent driving device to offset by a lateral offset A in a direction away from the target vehicle door, and/or controlling the intelligent driving device to travel at a longitudinal deceleration A; or when the collision risk level is the second level, controlling the intelligent driving device to offset by a lateral offset B in a direction away from the target vehicle door, and/or controlling the intelligent driving device to travel at a longitudinal deceleration B. The lateral offset A is less than the lateral offset B, and the longitudinal deceleration A is less than the longitudinal deceleration B.

With reference to the second aspect, in some implementations of the second aspect, the collision risk level is further associated with an obstacle on a side that is of the intelligent driving device and that is away from the target vehicle door.

Specifically, a collision risk level (for example, a third level) corresponding to a case in which there is an obstacle on the side that is of the intelligent driving device and that is away from the target vehicle door is higher than a collision risk level (for example, a fourth level) corresponding to a case in which there is no obstacle on the side that is of the intelligent driving device and that is away from the target vehicle door.

In some implementations, when the collision risk level is the third level, the intelligent driving device is controlled to travel at a longitudinal deceleration C; or when the collision risk level is the fourth level, the intelligent driving device is controlled to travel at a longitudinal deceleration D. The longitudinal deceleration C is greater than the longitudinal deceleration D.

In some implementations, when the collision risk level is the third level, the intelligent driving device is controlled to offset by a lateral offset C in a direction away from the target vehicle door; or when the collision risk level is the fourth level, the intelligent driving device is controlled to offset by a lateral offset D in a direction away from the target vehicle door. The lateral offset C is less than the lateral offset D.

With reference to the second aspect, in some implementations of the second aspect, the method further includes: controlling a prompt apparatus to prompt at least one of the following: opening of the target vehicle door; a detection result; or an obstacle avoidance path, where the obstacle avoidance path is determined based on the lateral offset and the longitudinal velocity.

According to a third aspect, a control apparatus is provided, and the apparatus includes an obtaining unit and a processing unit. The obtaining unit is configured to obtain location information and vehicle door information of a target vehicle, where the vehicle door information indicates at least one of the following: opening duration of a target vehicle door of the target vehicle or a detection result of a driver or passenger at the target vehicle door. The target vehicle door is located on a side that is of the target vehicle and that is close to the intelligent driving device. The processing unit is configured to: control, based on the location information and the vehicle door information, a lateral offset of the intelligent driving device in a direction away from the target vehicle door, and/or a longitudinal velocity of the intelligent driving device.

With reference to the first aspect, in some implementations of the first aspect, the processing unit is configured to: determine a lateral distance between the target vehicle and the intelligent driving device based on the location information, and when the lateral distance is less than or equal to a first distance threshold, perform any one of the following: when the opening duration of the target vehicle door is greater than or equal to a first duration threshold, controlling the intelligent driving device to offset by a first lateral offset; when the opening duration of the target vehicle door is less than the first duration threshold, controlling the intelligent driving device to offset by a second lateral offset; when a driver or passenger is detected at the target vehicle door, controlling the intelligent driving device to offset by a third lateral offset; or when no driver or passenger is detected at the target vehicle door, controlling the intelligent driving device to offset by a fourth lateral offset. The second lateral offset is greater than the first lateral offset, and the third lateral offset is greater than the fourth lateral offset.

With reference to the third aspect, in some implementations of the third aspect, the target vehicle is located diagonally ahead of the intelligent driving device.

With reference to the third aspect, in some implementations of the third aspect, the obtaining unit is further configured to obtain information about an obstacle on a side that is of the intelligent driving device and that is away from the target vehicle door. The processing unit is configured to control the lateral offset based on the information about the obstacle, the location information, and the vehicle door information.

With reference to the third aspect, in some implementations of the third aspect, the information about the obstacle further includes an obstacle type, and the obstacle type includes a dynamic obstacle and/or a static obstacle. The processing unit is configured to: when the obstacle type indicates that the obstacle located on the side that is of the intelligent driving device and that is away from the target vehicle door is the dynamic obstacle, control the intelligent driving device to offset by a fifth lateral offset; and when the obstacle type indicates that the obstacle located on the side that is of the intelligent driving device and that is away from the target vehicle door is the static obstacle, control the intelligent driving device to offset by a sixth lateral offset. The fifth lateral offset is greater than the sixth lateral offset.

With reference to the third aspect, in some implementations of the third aspect, the processing unit is further configured to: when the opening duration of the target vehicle door is greater than or equal to the first duration threshold, control the intelligent driving device to travel at a first longitudinal deceleration or a first velocity; when the opening duration of the target vehicle door is less than the first duration threshold, control the intelligent driving device to travel at a second longitudinal deceleration or a second velocity; when a driver or passenger is detected at the target vehicle door, control the intelligent driving device to travel at a third longitudinal deceleration or a third velocity; or when no driver or passenger is detected at the target vehicle door, control the intelligent driving device to travel at a fourth longitudinal deceleration or a fourth velocity. The second longitudinal deceleration is greater than the first longitudinal deceleration, the third longitudinal deceleration is greater than the fourth longitudinal deceleration, the second velocity is less than the first velocity, and the third velocity is less than the fourth velocity.

With reference to the third aspect, in some implementations of the third aspect, the processing unit is configured to: when there is the obstacle on the side that is of the intelligent driving device and that is away from the target vehicle door, control the intelligent driving device to travel at a fifth longitudinal deceleration or a fifth velocity; or when there is no obstacle on the side that is of the intelligent driving device and that is away from the target vehicle door, control the intelligent driving device to travel at a sixth longitudinal deceleration or a sixth velocity. The fifth longitudinal deceleration is greater than the sixth longitudinal deceleration, and the fifth velocity is less than the sixth velocity.

According to a fourth aspect, a control apparatus is provided. The apparatus includes a processing unit, configured to: determine a collision risk level based on opening duration of a target vehicle door of a target vehicle and/or a detection result of a driver or passenger at the target vehicle door, and a lateral distance between the target vehicle and an intelligent driving device, where the target vehicle door is located on a side that is of the target vehicle and that is close to the intelligent driving device; and control a lateral offset and a longitudinal velocity of the intelligent driving device based on the collision risk level.

With reference to the fourth aspect, in some implementations of the fourth aspect, a collision risk level corresponding to a first lateral distance includes a first level and a second level. The first level is associated with first opening duration and/or a first detection result, the second level is associated with second opening duration and/or a second detection result, the first opening duration is greater than or less than the second opening duration, the first detection result indicates that a driver or passenger is detected at the target vehicle door, and the second detection result indicates that no driver or passenger is detected at the target vehicle door.

The processing unit is configured to: when the collision risk level is the first level, control the intelligent driving device to offset by a lateral offset A in a direction away from the target vehicle door, and/or control the intelligent driving device to travel at a longitudinal deceleration A; or when the collision risk level is the second level, control the intelligent driving device to offset by a lateral offset B in a direction away from the target vehicle door, and/or control the intelligent driving device to travel at a longitudinal deceleration B. The lateral offset A is less than the lateral offset B, and the longitudinal deceleration A is less than the longitudinal deceleration B.

With reference to the fourth aspect, in some implementations of the fourth aspect, the collision risk level is further associated with an obstacle on a side that is of the intelligent driving device and that is away from the target vehicle door.

With reference to the fourth aspect, in some implementations of the fourth aspect, the processing unit is configured to: when the collision risk level is a third level, control the intelligent driving device to travel at a longitudinal deceleration C; or when the collision risk level is a fourth level, control the intelligent driving device to travel at a longitudinal deceleration D. The longitudinal deceleration C is greater than the longitudinal deceleration D.

With reference to the fourth aspect, in some implementations of the fourth aspect, the processing unit is configured to: when the collision risk level is the third level, control the intelligent driving device to offset by a lateral offset C in a direction away from the target vehicle door; or when the collision risk level is the fourth level, control the intelligent driving device to offset by a lateral offset D in a direction away from the target vehicle door. The lateral offset C is less than the lateral offset D.

With reference to the third aspect or the fourth aspect, in some implementations of the third aspect or the fourth aspect, the processing unit is further configured to control a prompt apparatus to prompt at least one of the following: opening of the target vehicle door; a detection result; or an obstacle avoidance path, where the obstacle avoidance path is determined based on the lateral offset and the longitudinal velocity.

According to a fifth aspect, a control apparatus is provided. The apparatus includes a processor, configured to execute the computer program stored in a memory, so that the apparatus performs the method according to any one of the possible implementations of the first aspect or the second aspect.

With reference to the fifth aspect, in some implementations of the fifth aspect, the control apparatus further includes the memory.

According to a sixth aspect, an intelligent driving device is provided, and the intelligent driving device includes the apparatus according to any one of the possible implementations of the third aspect to the fifth aspect.

With reference to the sixth aspect, in some implementations of the sixth aspect, the intelligent driving device is a vehicle.

According to a seventh aspect, a computer program product is provided. The computer program product includes computer program code, and when the computer program code is run on a computer, the computer is enabled to perform the method according to any one of the possible implementations of the first aspect or the second aspect.

It should be noted that the computer program code may be completely or partially stored in a storage medium. The storage medium may be encapsulated with a processor, or encapsulated separately from a processor.

According to an eighth aspect, a computer-readable medium is provided. The computer-readable medium stores instructions. When the instructions are executed by a processor, the processor is enabled to implement the method according to any one of the possible implementations of the first aspect or the second aspect.

According to a ninth aspect, a chip is provided. The chip includes a circuit, and the circuit is configured to perform the method according to any one of the possible implementations of the first aspect or the second aspect.

### BRIEF DESCRIPTION OF DRAWINGS

FIG. 1 is a diagram of an application scenario of a control solution according to an embodiment of this application;
FIG. 2 is another diagram of an application scenario of a control solution according to an embodiment of this application;
FIG. 3 is a functional block diagram of an intelligent driving device according to an embodiment of this application;
FIG. 4 is a diagram of an architecture of a control system according to an embodiment of this application;
FIG. 5 is a schematic flowchart of a control method according to an embodiment of this application;
FIG. 6 is another schematic flowchart of a control method according to an embodiment of this application;
FIG. 7 is still another diagram of an application scenario of a control solution according to an embodiment of this application;
FIG. 8 is still another schematic flowchart of a control method according to an embodiment of this application;
FIG. 9 is a diagram of an HMI according to an embodiment of this application;
FIG. 10 is yet another schematic flowchart of a control method according to an embodiment of this application;
FIG. 11 is a block diagram of a control apparatus according to an embodiment of this application; and
FIG. 12 is another block diagram of a control apparatus according to an embodiment of this application.

### DESCRIPTION OF EMBODIMENTS

The following describes technical solutions of this application with reference to accompanying drawings.

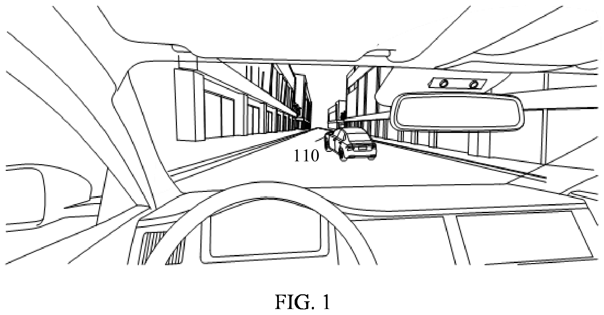

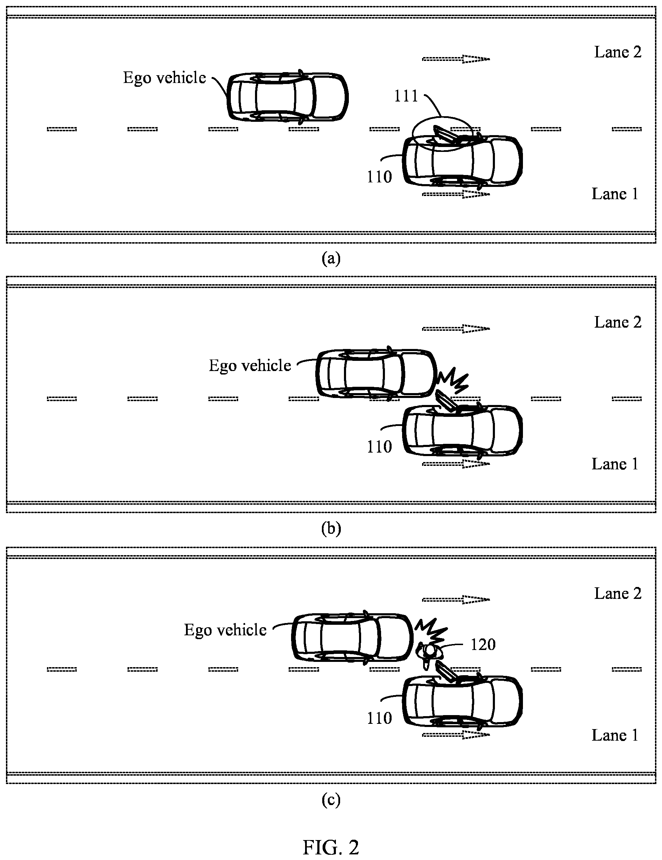

FIG. 1 is a diagram of a scenario that may be encountered in a driving process of a vehicle. As shown in FIG. 1, there is a vehicle 110 in front of the ego vehicle. In a process in which the ego vehicle travels forward, a vehicle door 111 of the vehicle 110 may be opened (as shown in (a) in FIG. 2). In this case, if the ego vehicle does not avoid the vehicle 110 in time, and a lateral distance between the ego vehicle and the vehicle 110 is small, the ego vehicle may collide with the vehicle door 111 (as shown in (b) in FIG. 2). Alternatively, a passenger 120 in the vehicle 110 may get off from the opened vehicle door 111, and the ego vehicle does not avoid the vehicle 110 in time. As a result, the ego vehicle collides with the passenger 120 (as shown in (c) in FIG. 2).

Embodiments of this application provide a control method and apparatus, and an intelligent driving device, to reduce a probability of collision between an ego vehicle and a front vehicle whose vehicle door is opened or a passenger who gets off from the vehicle door of the front vehicle in a driving process of the ego vehicle, the longitudinal velocity and/or the lateral offset of the ego vehicle can be controlled based on the opening duration of the vehicle door and/or a detection result of the driver or passenger at the opened vehicle door. The opening duration of the vehicle door can reflect, to some extent, a possibility that a passenger may appear at the vehicle door, and the vehicle is controlled in advance to perform avoidance to different degrees based on a possibility that a passenger appears at the vehicle door. This can reduce a collision probability and improve driving safety; and the vehicle would not overreact (for example, sudden braking) to a scenario in which the vehicle door of the front vehicle is opened, and help improve driving or riding experience of a user of the ego vehicle.

The control solution provided in this embodiment of this application may be deployed in a vehicle as an active safety function (for example, a door open warning (door open warning, DOW) function), to improve driving safety. It should be understood that the DOW function is different from a conventional warning for opening a vehicle door of the ego vehicle. This embodiment of this application is mainly used to warn an opened vehicle door of another vehicle, and take an active obstacle avoidance measure.

It should be noted that, in embodiments of this application, "lateral" may be understood as a direction perpendicular to a longitudinal symmetric plane of the vehicle, that is, in a plane parallel to the ground, perpendicular to a driving direction of the vehicle. In embodiments of this application, "longitudinal" may be understood as a plane parallel to the ground, a direction parallel to a longitudinal symmetry plane of the vehicle, that is, a driving direction of the vehicle.

It should be further noted that the vehicle door in embodiments of this application may be a straight-open vehicle door, that is, a vehicle door that is opened by rotating with a front end of the vehicle door as a circle center. Alternatively, the vehicle door in embodiments of this application may further include but is not limited to a scissors-type vehicle door, a wing-type vehicle door, a butterfly-type vehicle door, a revolving vehicle door, and a sliding vehicle door.

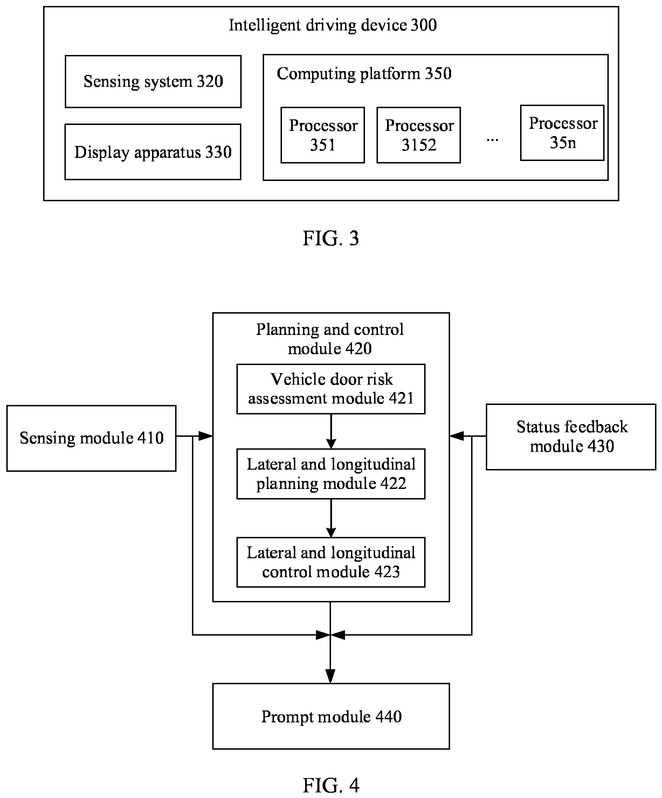

The following describes a system provided in an embodiment of this application with reference to FIG. 3 and FIG. 4.

FIG. 3 is a functional block diagram of an intelligent driving device according to an embodiment of this application. As shown in FIG. 1, an intelligent driving device 300 may include a sensing system 320, a display apparatus 330, and a computing platform 350. The sensing system 320 may include several sensors configured to sense information about an environment around the intelligent driving device 300. For example, the sensing system 320 may include a positioning system. The positioning system may be a global positioning system (global positioning system, GPS), a BeiDou system, or another positioning system. For another example, the sensing system 320 may further include one or more of an inertial measurement unit (inertial measurement unit, IMU), a lidar, a millimeter-wave radar, an ultrasonic radar, and a camera apparatus.

Some or all functions of the intelligent driving device 300 may be controlled by the computing platform 350. The computing platform 350 may include processors 351 to 35n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 350 may further include a memory. The memory is configured to store instructions. Some or all of the processors 351 to 35n may invoke the instructions in the memory, to implement a corresponding function.

The display apparatus 330 in a cockpit is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cockpit, for example, a digital dashboard display and a central display. The head-up display is also referred to as a head-up display system. The head-up display is mainly configured to display driving information such as a speed and navigation on a display device (for example, a windshield) in front of a driver, to reduce line-of-sight transfer time of the driver avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system. The display apparatus may further include a human machine interface (human machine interface, HMI).

The intelligent driving device 300 may include an advanced driving assistant system (advanced driving assistant system, ADAS). The ADAS obtains information around the intelligent driving device via a plurality of sensors (including but not limited to a lidar, a millimeter-wave radar, an image shooting apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and driver monitoring/reminding, so as to improve driving safety, automation, and comfort of the intelligent driving device.

In terms of logical functions, the ADAS system usually includes three main functional modules: a sensing module, a decision-making module, and an execution module. The sensing module senses a surrounding environment of the vehicle body via a sensor, and inputs corresponding real-time data to a processing center at a decision-making layer. The sensing module mainly includes a vehicle-mounted camera, an ultrasonic radar, a millimeter-wave radar, a lidar, and the like. The decision-making module uses a computing apparatus and an algorithm to make a corresponding decision based on information obtained by the sensing module. After receiving the decision signal from the decision module, the execution module takes a corresponding action, for example, driving, lane change, steering, braking, or warning.

Under different autonomous driving levels (L0-L5), the ADAS may implement different levels of autonomous driving assistance based on information obtained based on an artificial intelligence algorithm and a plurality of sensors. The foregoing autonomous driving levels (L0-L5) are based on level standards of the society of automotive engineers (society of automotive engineers, SAE). L0 indicates no automation, L1 indicates driving assistance, L2 indicates partial automation, L3 indicates conditional automation, L4 indicates high automation, and L5 indicates full automation. The task of monitoring a road and responding to the road at L1-L3 are completed by the driver and the system, and the driver needs to take over a dynamic driving task. The driver may be completely transformed into a passenger at L4 and L5. Currently, functions that can be implemented by the ADAS mainly include but are not limited to: adaptive cruise control, automatic emergency braking, automatic parking, blind spot monitoring, traffic warning/braking at front crossroads, traffic warning/braking at rear crossroads, front vehicle collision warning, lane departure warning, lane keeping assist, rear vehicle anti-collision warning, traffic sign recognition, traffic jam assist, and highway assist. It should be understood that the foregoing functions may have specific modes at different automatic driving levels (L0-L5). A higher automatic driving level indicates a more intelligent mode.

The intelligent driving device in this application may include a vehicle on a road, a vehicle on water, an air vehicle, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the vehicle may be a transport tool like an airplane or a ship.

In this embodiment of this application, the computing platform 350 may plan a lateral path and a longitudinal velocity of the intelligent driving device based on location information and vehicle door information that are of a front vehicle and that are obtained by the sensing system 320, to avoid a collision with a vehicle door of the front vehicle and/or a passenger who gets off from a vehicle door of the front vehicle. The display apparatus 330 may display a location of a vehicle whose vehicle door is opened and an opening status of the vehicle door that are detected by the sensing system 320, and may further display a path that is planned by the computing platform 350 and that is used to avoid the front vehicle whose vehicle door is opened.

FIG. 4 is a diagram of an architecture of a control system according to an embodiment of this application. As shown in FIG. 4, the system includes a sensing module 410, a planning and control module 420, a status feedback module 430, and a prompt module 440. The sensing module 410 may include one or more sensors in the sensing system 320 shown in FIG. 3. The planning and control module 420 may include one or more processors in the computing platform 350 shown in FIG. 3. The planning and control module 420 includes a vehicle door risk assessment module 421, a lateral and longitudinal planning module 422, and a lateral and longitudinal control module 423. The prompt module 440 may include the display apparatus 330 shown in FIG. 3.

Specifically, the sensing module 410 may obtain ambient environment information of an intelligent driving device. The environment information includes location information and vehicle door information of another vehicle in a driving direction of the intelligent driving device. The vehicle door information may include an opening angle of a vehicle door and opening duration of the vehicle door. Further, the sensing module 410 sends the environment information to the planning and control module 420. In addition, the planning and control module 420 obtains current motion status information such as a velocity and an acceleration of the intelligent driving device from the status feedback module 430. The vehicle door risk assessment module 421 in the planning and control module 420 determines a collision risk based on a lateral distance between the intelligent driving device and the another vehicle whose vehicle door is opened and the opening duration of the vehicle door. Further, the collision risk is input to the lateral and longitudinal planning module 422 to plan a lateral track and a longitudinal track of the intelligent driving device based on the motion status information of the intelligent driving device and the collision risk. The lateral track and the longitudinal track are input to the lateral and longitudinal control module 423. The control module 230 calculates a corresponding control value based on a planned track, and outputs the control value to an executor. When the executor executes the control value, the intelligent driving device is controlled to travel based on the planned lateral track and longitudinal track. In some possible implementations, the executor may include a steering system and a braking control system in the intelligent driving device 300.

It should be understood that the foregoing system is merely an example. In actual application, modules in the foregoing system may be added or deleted based on an actual requirement. For example, the vehicle door risk assessment module 421 and the lateral and longitudinal planning module 422 may be combined into one module. For another example, the sensing module 410 and the status feedback module 430 may be combined into one module.

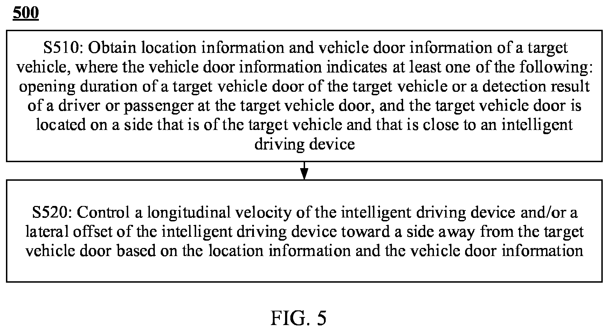

The foregoing describes the system provided in embodiments of this application. The following describes a detailed working procedure of the foregoing system with reference to FIG. 5 to FIG. 10.

FIG. 5 is a schematic flowchart of a control method according to an embodiment of this application. The method may be performed by the intelligent driving device 300 shown in FIG. 3, or may be performed by the lateral and longitudinal planning module 422 shown in FIG. 4. The method 500 may include the following steps.

S510: Obtain location information and vehicle door information of a target vehicle, where vehicle door information indicates at least one of the following: opening duration of a target vehicle door of the target vehicle or a detection result of a driver or passenger at the target vehicle door, and the target vehicle door is located on a side that is of the target vehicle and that is close to an intelligent driving device.

In some implementations, the driver or passenger detection result indicates a detection result of a driver or passenger within a preset range of the target vehicle door, and the preset range may be a range in which a lateral distance from the target vehicle door is less than or equal to 0.5 meter, or a range in which a lateral distance from the target vehicle door is less than or equal to 1 meter, or another preset range. The detection result includes that a driver or passenger is detected at the target vehicle door, or no driver or passenger is detected at the target vehicle door.

In some implementations, the opening duration of the target vehicle door may be duration in which the target vehicle door is opened when a longitudinal distance between the target vehicle and the intelligent driving device is greater than or equal to a distance threshold a and less than or equal to a distance threshold b. The distance threshold a may be 50 meters, or may be 100 meters, or may be another value. The distance threshold b may be 200 meters, or may be 250 meters, or may be other data, for example, a maximum distance at which a sensing system of the intelligent driving device can detect whether a vehicle door is opened.

S520: Control, based on the location information and the vehicle door information, a longitudinal velocity of the intelligent driving device and/or a lateral offset of the intelligent driving device in a direction away from the target vehicle door.

In some implementations, controlling, based on the location information and the vehicle door information, the longitudinal velocity of the intelligent driving device and/or the lateral offset of the intelligent driving device in the direction away from the target vehicle door includes: determining a potential get-off risk of the driver or passenger based on the vehicle door information, and controlling the longitudinal velocity and/or the lateral offset based on the location information and the potential get-off risk of the driver or passenger.

In an implementation (A), controlling, based on the location information and the vehicle door information, the lateral offset of the intelligent driving device in the direction away from the target vehicle door includes: determining a lateral distance between the target vehicle and the intelligent driving device based on the location information; and when the lateral distance is less than or equal to a first distance threshold, perform any one of the following:
(1) when the opening duration of the target vehicle door is greater than or equal to a first duration threshold, controlling the intelligent driving device to offset by a first lateral offset;
(2) when the opening duration of the target vehicle door is less than the first duration threshold, controlling the intelligent driving device to offset by a second lateral offset;
(3) when a driver or passenger is detected at the target vehicle door, controlling the intelligent driving device to offset by a third lateral offset; or
(4) when no driver or passenger is detected at the target vehicle door, controlling the intelligent driving device to offset by a fourth lateral offset.

The second lateral offset is greater than the first lateral offset, and the third lateral offset is greater than the fourth lateral offset. In some implementations, the third lateral offset is greater than or equal to the second lateral offset.

For example, when the lateral distance between the target vehicle and the intelligent driving device is a distance between outlines of the target vehicle and the intelligent driving device, the first distance threshold may be 0.3 meter, 0.5 meter, or another value. When the lateral distance between the target vehicle and the intelligent driving device is a distance between central axes of the target vehicle and the intelligent driving device, the first distance threshold may be 2.5 meters, 3 meters, or another value.

During actual implementation, the driver or passenger may be detected when the opening duration of the target vehicle door is greater than or equal to the first duration threshold. In this case, the lateral offset is subject to a larger value, that is, the intelligent driving device is controlled to offset by the third lateral offset.

In an implementation (B), the method further includes: obtaining information about an obstacle on a side that is of the intelligent driving device and that is away from the target vehicle door. Controlling, based on the location information and the vehicle door information, the lateral offset of the intelligent driving device in the direction away from the target vehicle door includes: controlling the lateral offset based on the information about the obstacle, the location information, and the vehicle door information.

In some implementations, the information about the obstacle further includes an obstacle type, and the obstacle type includes a dynamic obstacle and/or a static obstacle. Controlling the lateral offset based on the information about the obstacle, the location information, and the vehicle door information includes:
(1) when the obstacle type indicates that the obstacle located on the side that is of the intelligent driving device and that is away from the target vehicle door is the dynamic obstacle, controlling the intelligent driving device to offset by a fifth lateral offset; or
(2) when the obstacle type indicates that the obstacle located on the side that is of the intelligent driving device and that is away from the target vehicle door is the static obstacle, controlling the intelligent driving device to offset by a sixth lateral offset, where the fifth lateral offset is greater than the sixth lateral offset.

In an implementation (C), controlling the longitudinal velocity of the intelligent driving device based on the location information and the vehicle door information includes at least one of the following:
(1) when the opening duration of the target vehicle door is greater than or equal to a first duration threshold, controlling the intelligent driving device to travel at a first longitudinal deceleration;
(2) when the opening duration of the target vehicle door is less than the first duration threshold, controlling the intelligent driving device to travel at a second longitudinal deceleration;
(3) when a driver or passenger is detected at the target vehicle door, controlling the intelligent driving device to travel at a third longitudinal deceleration; or
(4) when no driver or passenger is detected at the target vehicle door, controlling the intelligent driving device to travel at a fourth longitudinal deceleration.

The second longitudinal deceleration is greater than the first longitudinal deceleration, and the third longitudinal deceleration is greater than the fourth longitudinal deceleration.

In some implementations, the third longitudinal deceleration is greater than or equal to the second longitudinal deceleration. During actual implementation, if a driver or passenger is detected when the opening duration of the target vehicle door is greater than or equal to the first duration threshold, a larger value is used for longitudinal deceleration, that is, the intelligent driving device is controlled to travel at the third longitudinal deceleration.

In an implementation (D), controlling the longitudinal velocity of the intelligent driving device based on the location information and the vehicle door information includes at least one of the following:
(1) when the opening duration of the target vehicle door is greater than or equal to a first duration threshold, controlling the intelligent driving device to travel at a first velocity;
(2) when the opening duration of the target vehicle door is less than the first duration threshold, controlling the intelligent driving device to travel at a second velocity;
(3) when a driver or passenger is detected at the target vehicle door, controlling the intelligent driving device to travel at a third velocity; or
(4) when no driver or passenger is detected at the target vehicle door, controlling the intelligent driving device to travel at a fourth velocity.

The second velocity is less than the first velocity, and the third velocity is less than the fourth velocity.

In some implementations, the third velocity is less than or equal to the second velocity. During actual implementation, if a driver or passenger is detected when the opening duration of the target vehicle door is greater than or equal to the first duration threshold, a smaller value is used for longitudinal velocity, that is, the intelligent driving device is controlled to travel at the third velocity.

In an implementation (E), controlling the longitudinal velocity of the intelligent driving device based on the location information and the vehicle door information includes:
(1) when there is an obstacle on the side that is of the intelligent driving device and that is away from target vehicle door, controlling the intelligent driving device to travel at a fifth longitudinal deceleration or a fifth velocity; or
(2) when there is no obstacle on the side that is of the intelligent driving device and that is away from the target vehicle door, controlling the intelligent driving device to travel at a sixth longitudinal deceleration or a sixth velocity.

The fifth longitudinal deceleration is greater than the sixth longitudinal deceleration, and the fifth velocity is less than the sixth velocity.

It should be understood that the first velocity to the sixth velocity each are an average velocity, for example, may be an average velocity of the intelligent driving device within a distance.

It should be noted that two or more of the foregoing implementations (A) to (E) may be combined. For example, when the opening duration of the target vehicle door is greater than or equal to the first duration threshold, and a driver or passenger is detected at the target vehicle door, the intelligent driving device is controlled to offset by the third lateral offset in a direction away from the target vehicle door, and the intelligent driving device is controlled to travel at the third velocity and/or the third longitudinal deceleration. For another example, when the opening duration of the target vehicle door is greater than or equal to the first duration threshold, no driver or passenger is detected at the target vehicle door, and there is the static obstacle on the side that is of the intelligent driving device and that is away from the target vehicle door, the intelligent driving device is controlled to offset by a sixth lateral offset in a direction away from the target vehicle door, and the intelligent driving device is controlled to travel at the fifth velocity and/or the fifth longitudinal deceleration.

In some implementations, the method further includes: controlling a prompt apparatus to prompt at least one of the following: opening of the target vehicle door; a detection result; or an obstacle avoidance path, where the obstacle avoidance path is determined based on the lateral offset and the longitudinal velocity.

For example, the prompt apparatus may include a display apparatus, for example, a central display or a dashboard; or may further include a sound generation apparatus, for example, a sound system or a loudspeaker.

According to the control method provided in this embodiment of this application, the intelligent driving device is controlled to perform different degrees of lateral avoidance or longitudinal braking based on the potential get-off risk of the driver or passenger, reducing a collision probability, and improving safety of the intelligent driving device; and the intelligent driving device would not overreact (for example, suddenly brake or suddenly turn a steering wheel) to a scenario in which the vehicle door of the front vehicle is opened. This helps improve driving or riding experience of a user of the intelligent driving device.

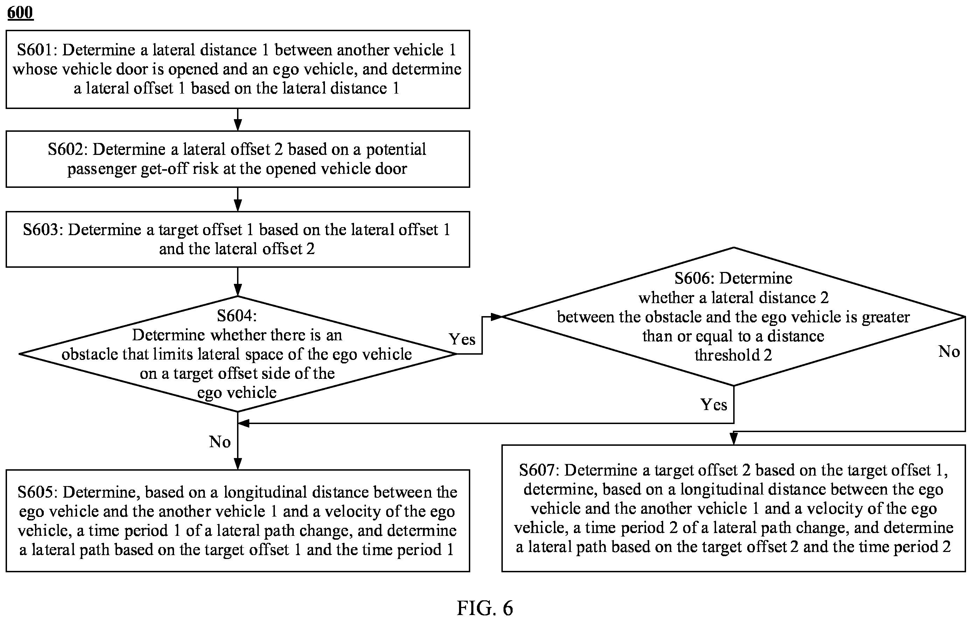

FIG. 6 is another schematic flowchart of a control method according to an embodiment of this application. The method may be performed by the intelligent driving device 300 shown in FIG. 3, or may be performed by the lateral and longitudinal planning module 422 shown in FIG. 4. The method 600 may be considered as an extended description of S520 in the foregoing embodiment. The following uses an example in which the intelligent driving device is a vehicle for description. The method 600 may include all or some of steps S601 to S607.

S601: Determine a lateral distance 1 between another vehicle 1 whose vehicle door is opened and an ego vehicle, and determine a lateral offset 1 based on the lateral distance 1 between the another vehicle and the ego vehicle.

The another vehicle 1 may be considered as an example of a target vehicle, and the vehicle door opened on a side that is of the another vehicle 1 and that is close to the ego vehicle may be considered as an example of a target vehicle door. For example, the another vehicle 1 may be the vehicle 110 shown in FIG. 1 or FIG. 2, and the opened vehicle door of the another vehicle 1 may be the vehicle door 111 shown in FIG. 1 or FIG. 2. The lateral distance 1 may be considered as an example of a lateral distance between the target vehicle and the intelligent driving device, and a distance threshold 1 may be considered as an example of a first distance threshold.

It should be noted that the lateral distance 1 between the another vehicle and the ego vehicle may be a distance between central axes of the two vehicles, or may be a distance between outlines of the two vehicles. The following uses an example in which the lateral distance 1 is the distance between the central axes of the two vehicles for description.

For example, the lateral offset 1 is an offset of the ego vehicle in a direction away from the another vehicle 1. A relationship between the lateral offset 1 and the lateral distance 1 between the another vehicle and the ego vehicle may be shown in Table 1.

**Table 1**

| Lateral distance 1 | Lateral offset 1 |
|---|---|
| Greater than the distance threshold 1 | 0 |
| Less than or equal to the distance threshold 1 | a-b |

a is a safe distance ensuring that when the ego vehicle travels in a current lane, the ego vehicle does not scratch the opened vehicle door of the another vehicle located in the nearest adjacent lane, and b is the lateral distance 1 between the another vehicle and the ego vehicle (that is, the lateral distance between the central axes of the another vehicle and the ego vehicle). In an example, a may be a sum of a half of a width of the ego vehicle, a half of a width of the another vehicle 1, a preset vehicle door width, and a preset safety distance. The preset vehicle door width may be 1 meter, or may be 0.9 meters, or may be another value, for example, the preset vehicle door width is determined based on a vehicle door type. The preset safety distance may be 10 centimeters, or may be 15 centimeters, or may be another value. In another example, a may alternatively be determined in another manner.

A manner of determining the distance threshold 1 may be the same as a manner of determining the value a in Table 1, or the distance threshold 1 may be another value.

S602: Determine a lateral offset 2 based on a potential passenger get-off risk at the opened vehicle door.

For example, the lateral offset 2 is an offset of the ego vehicle in a direction away from the another vehicle 1.

In some implementations, a higher potential passenger get-off risk indicates a larger lateral offset 2. For example, the potential passenger get-off risk at the opened vehicle door may be measured based on the opening duration of the vehicle door and/or a detection result of a driver or passenger at the opened vehicle door, that is, the lateral offset 2 may be determined based on the opening duration of the vehicle door and/or the detection result of the driver or passenger at the opened vehicle door.

In an example, a relationship between the opening duration of the vehicle door and a lateral offset 2-1 may be shown in Table 2.

**Table 2**

| Opening duration of the vehicle door | Lateral offset 2-1 |
|---|---|
| Greater than or equal to a time threshold 1 | 0 |
| Less than the time threshold 1 | c |

For example, c may be 0.1 meter, or may be 0.3 meter, or may be another value. The time threshold 1 may be 2 seconds, or may be 3 seconds, or may be other duration. For example, the time threshold 1 may be determined based on a velocity of the vehicle. For example, the time threshold 1 may be determined according to the following formula: ${t}_{thres} = n \frac{D 2 - D 1}{v} .$

*tₜₕᵣₑₛ* represents the time threshold 1, D2 represents a distance threshold b, D1 represents a distance threshold a, v represents a velocity of the ego vehicle, n is a coefficient, and a value of n may be greater than 0 and less than 1. For example, n may be 0.5, or may be 0.8, or may be another value.

In another example, a relationship between the detection result of the driver or passenger at the opened vehicle door and a lateral offset 2-2 may be shown in Table 3.

**Table 3**

| Detection result of the driver or passenger at the opened vehicle door | Lateral offset 2-2 |
|---|---|
| A driver or passenger is detected | d |
| No driver or passenger is detected | 0 |

For example, d may be 0.3 meter, or may be 0.5 meter, or may be another value. A value of d may be greater than or equal to the value of c.

Further, the lateral offset 2 may be determined based on the lateral offset 2-1 and the lateral offset 2-2. In an example, the lateral offset 2 may be a superposition value of the lateral offset 2-1 and the lateral offset 2-2. For example, when the opening duration of the vehicle door is less than the time threshold 1, and a driver or passenger is detected at the opened vehicle door, the lateral offset 2 is c+d. For another example, when the opening duration of the vehicle door is greater than or equal to the time threshold 1, and a driver or passenger is detected at the opened vehicle door, the lateral offset 2 may be d. In another example, the lateral offset 2 may be a larger value of the lateral offset 2-1 and the lateral offset 2-2. For example, when the opening duration of the vehicle door is less than the time threshold 1, and a driver or passenger is detected at the opened vehicle door, the lateral offset 2 is d. For another example, when the opening duration of the vehicle door is greater than or equal to the time threshold 1, and a driver or passenger is detected at the opened vehicle door, the lateral offset 2 may be d.

S603: Determine a target offset 1 based on the lateral offset 1 and the lateral offset 2.

For example, the target offset 1 may be a sum of the lateral offset 1 and the lateral offset 2. Alternatively, the target offset 1 may be greater than or equal to a sum of the lateral offset 1 and the lateral offset 2.

The target offset 1 may be an example of any one of the first lateral offset to the fourth lateral offset.

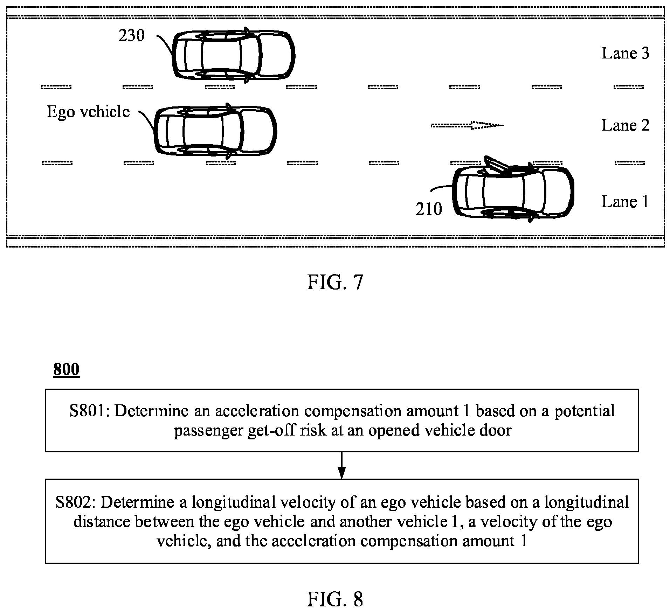

In some implementations, there may be an obstacle that restricts lateral space of the ego vehicle on a target offset side of the ego vehicle. For example, as shown in FIG. 7, there is a vehicle 230 that restricts the lateral space of the ego vehicle on the left side of the ego vehicle. In this case, S604 further needs to be performed after S603 is performed.

S604: Determine whether there is the obstacle that limits the lateral space of the ego vehicle on the target offset side of the ego vehicle.

It should be noted that the target offset side is a side that is of the ego vehicle and that is away from the another vehicle 1.

For example, the obstacle may be a static obstacle (referred to as a static obstacle below), for example, a green belt, a wall, a mountain, or an isolation guardrail. Alternatively, the obstacle may be a dynamic obstacle (referred to as a dynamic obstacle below), for example, a vehicle driving on a lane adjacent to the target offset side.

Specifically, when it is determined that there is no obstacle that limits the lateral space of the ego vehicle on the target offset side of the ego vehicle, S605 is performed; or when it is determined that there is an obstacle that limits the lateral space of the ego vehicle on the target offset side of the ego vehicle, S606 is performed.

S605: Determine, based on a longitudinal distance between the ego vehicle and the another vehicle 1 and the velocity of the ego vehicle, a time period 1 of a lateral path change, and determine a lateral path based on the target offset 1 and the time period 1.

For example, an end moment t_{end1} of the lateral path change is determined based on the longitudinal distance between the ego vehicle and the another vehicle 1 and the velocity of the ego vehicle. A lateral offset between a location of the ego vehicle at the end moment t_{end1} and a current location of the ego vehicle needs to be the target offset 1. A start moment tₛₜₐᵣₜ₁ of the lateral path change may be a moment determined after a period of time before the end moment t_{end1}. The period of time may be 2 seconds, 3 seconds, or another duration. For example, the duration may be determined based on the velocity of the ego vehicle and the target offset 1.

Further, the lateral path is a path formed by offsetting by the target offset 1 by the ego vehicle from the current location toward the target offset side in a lateral direction from the start moment tₛₜₐᵣₜ₁ to the end moment t_{end1}.

S606: Determine whether a lateral distance 2 between the obstacle and the ego vehicle is greater than or equal to a distance threshold 2.

The lateral distance 2 between the obstacle and the ego vehicle is a distance between an outline of the ego vehicle and an outline of the obstacle. The distance threshold 2 may be a sum of the target offset 1, a half of the width of the ego vehicle, and the preset safety distance. The preset safety distance may be 10 centimeters, or 20 centimeters, or another value.

Specifically, if the lateral distance 2 between the obstacle and the ego vehicle is greater than or equal to the target offset 1, S605 is performed; or if the lateral distance 2 between the obstacle and the ego vehicle is less than the target offset 1, S607 is performed.

S607: Determine a target offset 2 based on the target offset 1, determine, based on the longitudinal distance between the ego vehicle and the another vehicle 1 and the velocity of the ego vehicle, a time period 2 of a lateral path change, and determine the lateral path based on the target offset 2 and the time period 2.

In an example, if the obstacle is a static obstacle, the target offset 2 may be 0. Therefore, when the ego vehicle avoids the another vehicle 1 whose vehicle door is opened, the ego vehicle may perform only longitudinal braking.

The target offset 2 may be an example of the fifth lateral offset or the sixth lateral offset.

In another example, when the obstacle is a dynamic obstacle, the target offset 2 may be determined based on the lateral distance 2 and the target offset 1, and the target offset 2 is less than the target offset 1. Further, the time period 2 may be determined based on a driving direction of the dynamic obstacle and a driving direction of the ego vehicle. For example, if the driving direction of the dynamic obstacle is the same as the driving direction of the ego vehicle, and the dynamic obstacle is located behind the ego vehicle, a start moment and an end moment of the time period 2 are determined based on time headway between the ego vehicle and the dynamic obstacle and time headway between the ego vehicle and another vehicle 1. For example, the start moment tₛₜₐᵣₜ₂ of the time period 2 is a start moment at which both the time headway between the ego vehicle and the another vehicle 1 and the time headway between the ego vehicle and the dynamic obstacle meet a safe time distance, an end moment t_{end2} of a lane change time period is the latest moment at which both the time headway between the ego vehicle and the another vehicle 1 and the time headway between the ego vehicle and the dynamic obstacle meet the safe time headway. The lateral path is a path formed by the ego vehicle by offsetting by the target offset 2 from the current location to the target offset side in a lateral direction from the start moment tₛₜₐᵣₜ₂ to the end moment t_{end2}. For example, if the driving direction of the dynamic obstacle is opposite to the driving direction of the ego vehicle, the time period 2 may be set to 0. In other words, when the ego vehicle avoids another vehicle 1 whose vehicle door is opened, the ego vehicle may perform only longitudinal braking.

According to the control method provided in this embodiment of this application, the lateral offset of the vehicle can be determined based on different potential get-off risks of the driver or passenger. This helps improve driving or riding experience of a user of the ego vehicle while safety is ensured.

The method for determining the lateral offset in FIG. 6 is merely an example for description. During actual implementation, effect of controlling different lateral offsets of the ego vehicle based on different potential get-off risks of a driver or passenger may also be implemented in another manner. For example, different lateral boundaries or lateral drivable areas may be determined based on different potential get-off risks of a driver or passenger, to implement effect of controlling different lateral offsets. The lateral boundary or the lateral drivable area includes two boundaries, and is used to limit the lateral offset of the ego vehicle. In other words, the ego vehicle cannot exceed the foregoing boundary in a driving process.

FIG. 8 is still another schematic flowchart of a control method according to an embodiment of this application. The method may be performed by the intelligent driving device 300 shown in FIG. 3, or may be performed by the lateral and longitudinal planning module 422 shown in FIG. 4. The method 800 may be considered as an extended description of S520 in the foregoing embodiment. The method 800 may be performed synchronously with the method 600, or the method 800 may be performed before or after the method 600. The method 800 may include the following steps.

S801: Determine an acceleration compensation amount 1 based on a potential passenger get-off risk at an opened vehicle door.

As described above, the potential passenger get-off risk at the opened vehicle door may be measured based on opening duration of the vehicle door and/or a detection result of a driver or passenger at the opened vehicle door, that is, the acceleration compensation amount 1 may be determined based on the opening duration of the vehicle door and/or the detection result of the driver or passenger at the opened vehicle door.

In an example, a relationship between the opening duration of the vehicle door and the acceleration compensation amount 1-1 may be shown in Table 4.

**Table 4**

| Opening duration of the vehicle door | Acceleration compensation amount 1-1 |
|---|---|
| Greater than or equal to a time threshold 1 | 0 |
| Less than the time threshold 1 | A |

In another example, a relationship between the detection result of the driver or passenger at the opened vehicle door and the acceleration compensation amount 1-2 at the opened door may be shown in Table 5.

**Table 5**

| Detection result of the driver or passenger at the opened vehicle door | Acceleration compensation amount 1-2 |
|---|---|
| A driver or passenger is detected | B |
| No driver or passenger is detected | 0 |

A and B may be negative numbers, that is, A and B represent additional deceleration applied to the vehicle. An absolute value of B may be greater than or equal to an absolute value of A, that is, a deceleration indicated by B is greater than or equal to a deceleration indicated by A. In some implementations, actual values of A and B may be associated with an actual velocity of an ego vehicle. For example, absolute values of A and B may increase as the actual velocity of the ego vehicle increases.

Further, the acceleration compensation amount 1 may be determined based on the acceleration compensation amount 1-1 and the acceleration compensation amount 1-2. In an example, the acceleration compensation amount 1 may be a superposition value of the acceleration compensation amount 1-1 and the acceleration compensation amount 1-2. For example, when the opening duration of the vehicle door is less than the time threshold 1, and a driver or passenger is detected at the opened vehicle door, the acceleration compensation amount 1 is A+B. For another example, when the opening duration of the vehicle door is greater than or equal to the time threshold 1, and a driver or passenger is detected at the opened vehicle door, the acceleration compensation amount 1 may be B. In another example, the acceleration compensation amount 1 may be a larger value of the acceleration compensation amount 1-1 and the acceleration compensation amount 1-2. For example, when the opening duration of the vehicle door is less than the time threshold 1, and a driver or passenger is detected at the opened vehicle door, the acceleration compensation amount 1 is B. For another example, when the opening duration of the vehicle door is greater than or equal to the time threshold 1, and a driver or passenger is detected at the opened vehicle door, the acceleration compensation amount 1 may be B.

S802: Determine a longitudinal velocity of the ego vehicle based on a longitudinal distance between the ego vehicle and another vehicle 1, a current longitudinal velocity of the ego vehicle, and the acceleration compensation amount 1.

For example, the deceleration for continuing driving of the ego vehicle may be determined according to the following formula: ${A}_{t} = {A}_{0} + \frac{{v}_{c} - {v}_{t}}{S / {v}_{t}} .$

*Aₜ* is a target deceleration, *A*₀ is the acceleration compensation amount, for example, the acceleration compensation amount 1, *v_{c}* is the current longitudinal velocity of the ego vehicle, and *vₜ* is the target longitudinal velocity to which the ego vehicle is expected to decrease. It may be understood that both *Aₜ* and *A*₀ are values less than or equal to 0. Further, the longitudinal velocity of the vehicle is controlled based on the current longitudinal velocity of the ego vehicle and the target deceleration.

In some implementations, the method further includes: determining a lateral distance 1 between the another vehicle 1 and the ego vehicle, and determining an acceleration compensation amount 2 based on the lateral distance 1. Further, *A*₀ may be a sum of the acceleration compensation amount 1 and the acceleration compensation amount 2. It should be noted that the current acceleration compensation amount *A*₀ may be considered as an example of any one of a first longitudinal deceleration to a fourth longitudinal deceleration.

For example, a relationship between the lateral distance 1 and the acceleration compensation amount 2 may be shown in Table 6.

**Table 6**

| Lateral distance 1 | Acceleration compensation amount 2 |
|---|---|
| Greater than or equal to a distance threshold 1 | 0 |
| Less than the distance threshold 1 | C |

In some implementations, the method further includes: determining an acceleration compensation amount 3 based on the lateral distance 2 when there is an obstacle that limits lateral space of the ego vehicle on the target offset side of the ego vehicle. Further, *A*₀ may be a sum of the acceleration compensation amount 1 and the acceleration compensation amount 3. Alternatively, *A*₀ may be a sum of the acceleration compensation amount 1, the acceleration compensation amount 2, and the acceleration compensation amount 3. It should be noted that the current acceleration compensation amount *A*₀ may be considered as an example of a fifth longitudinal deceleration or a sixth longitudinal deceleration.

For example, a relationship between the lateral distance 2 and the acceleration compensation amount 3 may be shown in Table 7.

**Table 7**

| Lateral distance 2 between the ego vehicle and the obstacle | Acceleration compensation amount 3 |
|---|---|
| Greater than or equal to a distance threshold 2 | 0 |
| Less than the distance threshold 2 | D |

According to the control method provided in this embodiment of this application, a longitudinal deceleration and/or a longitudinal velocity of the vehicle can be determined based on different potential getting-off risks of the driver or passenger and/or an obstacle situation around the vehicle. This helps improve driving or riding experience of a user of the ego vehicle while safety is ensured.

The method shown in FIG. 8 is merely an example for description. In actual implementation, effect of controlling different velocities and/or decelerations of the ego vehicle based on different potential getting-off risks of the driver or passenger may also be implemented in another manner.

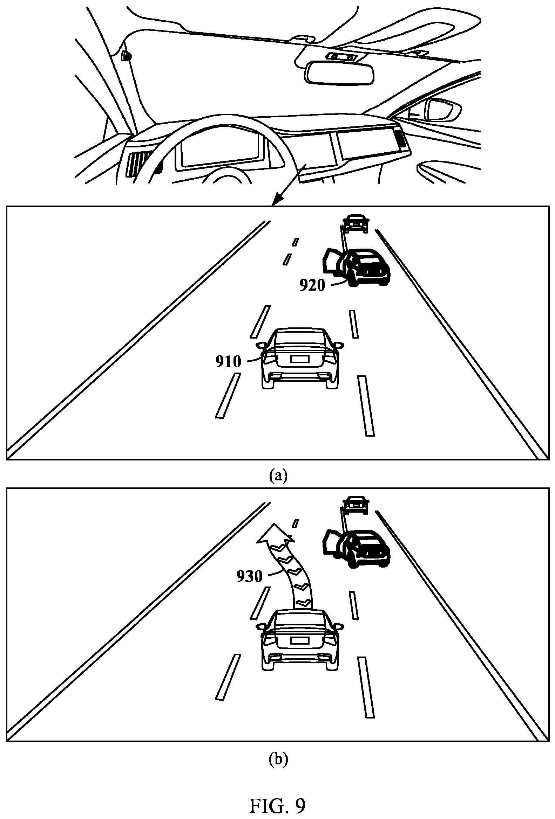

FIG. 9 is a diagram of an HMI according to an embodiment of this application. An icon 910 indicates a location and a status of an ego vehicle, and an icon 920 indicates a location and a status of another vehicle. As shown in (a) in FIG. 9, when a front vehicle door of the another vehicle close to a side of the ego vehicle is opened, the icon 920 may be highlighted, to remind a driver or passenger of the ego vehicle that the vehicle door of the front vehicle is opened. As shown in (b) in FIG. 9, when it is detected that the vehicle door of the another vehicle hinders normal driving of the ego vehicle, a lane change route planned for the ego vehicle may be displayed, as shown by an icon 930. It may be understood that the lane change path indicated by the icon 930 may be obtained through planning based on the lateral offset and/or the longitudinal velocity (or deceleration) determined in the foregoing embodiment.

It should be noted that FIG. 9 is merely an example for description. During actual implementation, the user of the ego vehicle may be further prompted, in a manner such as voice broadcast, that the vehicle door of the front vehicle is opened or the driving path needs to be changed. In addition, when a driver or passenger is detected at the opened target vehicle door, the user may also be prompted in the HMI or voice broadcast manner.

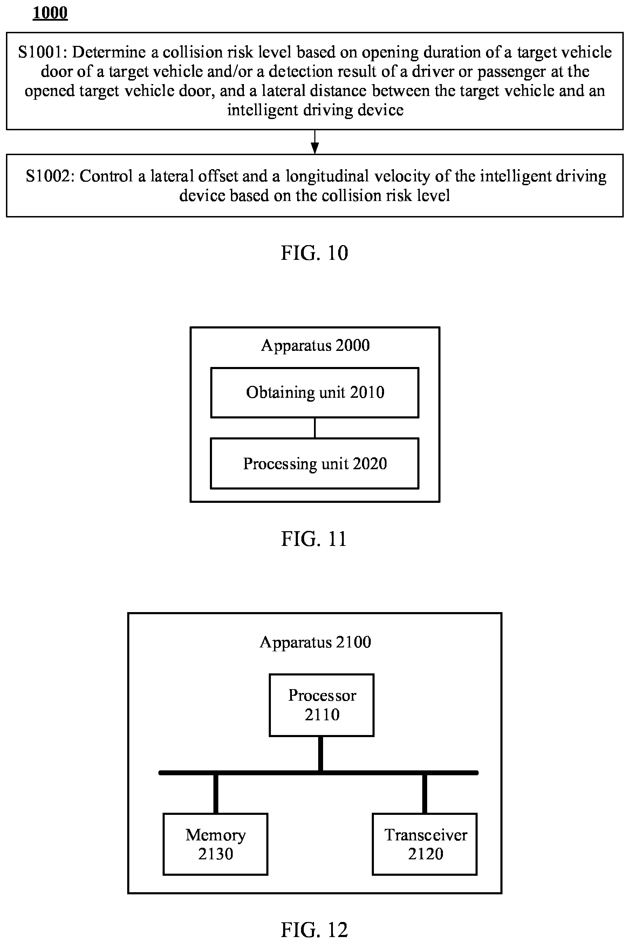

FIG. 10 is yet another schematic flowchart of a control method according to an embodiment of this application. The method may be performed by the intelligent driving device 300 shown in FIG. 3, or may be performed by the lateral and longitudinal planning module 422 shown in FIG. 4. The method 1000 may be considered as an extended description of S520 in the foregoing embodiment. The method 1000 may include the following steps.

S1001: Determine a collision risk level based on opening duration of a target vehicle door of a target vehicle and/or a detection result of a driver or passenger at the target vehicle door, and a lateral distance between the target vehicle and an intelligent driving device.

S1002: Control a lateral offset and a longitudinal velocity of the intelligent driving device based on the collision risk level.

In some implementations, a collision risk level corresponding to a first lateral distance includes a first level and a second level. The first level is associated with first opening duration and/or a first detection result, the second level is associated with second opening duration and/or a second detection result, the first opening duration is greater than or less than the second opening duration, the first detection result indicates that a driver or passenger is detected at the target vehicle door, and the second detection result indicates that no driver or passenger is detected at the target vehicle door. Controlling, based on the collision risk level, the lateral offset and the longitudinal velocity of the intelligent driving device includes: when the collision risk level is the first level, controlling the intelligent driving device to offset by a lateral offset A in a direction away from the target vehicle door, and/or controlling the intelligent driving device to travel at a longitudinal deceleration A; or when the collision risk level is the second level, controlling the intelligent driving device to offset by a lateral offset B in a direction away from the target vehicle door, and/or controlling the intelligent driving device to travel at a longitudinal deceleration B. The lateral offset A is less than the lateral offset B, and the longitudinal deceleration A is less than the longitudinal deceleration B.

In some implementations, the second aspect, in some implementations of the second aspect, the collision risk level is further associated with an obstacle on a side that is of the intelligent driving device and that is away from the target vehicle door.

Specifically, a collision risk level (for example, a third level) corresponding to a case in which there is an obstacle on the side that is of the intelligent driving device and that is away from the target vehicle door is higher than a collision risk level (for example, a fourth level) corresponding to a case in which there is no obstacle on the side that is of the intelligent driving device and that is away from the target vehicle door.

In some implementations, when the collision risk level is the third level, the intelligent driving device is controlled to travel at a longitudinal deceleration C; or when the collision risk level is the fourth level, the intelligent driving device is controlled to travel at a longitudinal deceleration D. The longitudinal deceleration C is greater than the longitudinal deceleration D.

In some implementations, when the collision risk level is the third level, the intelligent driving device is controlled to offset by a lateral offset C in a direction away from the target vehicle door; or when the collision risk level is the fourth level, the intelligent driving device is controlled to offset by a lateral offset D in a direction away from the target vehicle door. The lateral offset C is less than the lateral offset D.

In an example, a relationship between the collision risk level and the opening duration of the target vehicle door and the detection result of the driver or passenger at the target vehicle door is shown in Table 8. Risk levels of a level 1 to a level 4 are in ascending order.

**Table 8**

| Opening duration of the target vehicle door | Detection result of the driver or passenger at the target vehicle door | Collision risk level |
|---|---|---|
| Greater than or equal to a time threshold 1 | Fail to be detected | Level 1 |
| | Detected | Level 3 |
| Less than the time threshold 1 | Fail to be detected | Level 2 |
| | Detected | Level 4 |

In another example, a relationship between the collision risk level and the opening duration of the target vehicle door, the detection result of the driver or passenger at the target vehicle door, and a status about the obstacle that is on the side of the target vehicle door and that is away from the intelligent driving device is shown in Table 9. Risk degrees of the level a to the level e are in ascending order.

**Table 9**

| Opening duration of the target vehicle door | Detection result of the driver or passenger at the target vehicle door | Status about the obstacle that is on the side of the target vehicle door and that is away from the intelligent driving device | Collision risk level |
|---|---|---|---|
| Greater than or equal to a time threshold 1 | Fail to be detected | None | Level a |
| | | Yes | Level b |
| | Detected | None | Level c |
| | | Yes | Level d |
| Less than the time threshold 1 | Fail to be detected | None | Level b |
| | | Yes | Level c |
| | Detected | None | Level d |
| | | Yes | Level e |

It should be understood that the collision risk level classification in Table 8 and Table 9 is merely an example for description. During actual implementation, factors such as a distance (including a lateral distance and/or a longitudinal distance) between the intelligent driving device and the target vehicle, a distance (including a lateral distance and/or a longitudinal distance) between the target vehicle and an obstacle that is on the side of the target vehicle door and that is away from the intelligent driving device, a type of the obstacle that is on the side of the target vehicle door and that is away from the intelligent driving device, and the like further needs to be considered.

During actual implementation, different lateral offsets and/or longitudinal decelerations may be preset based on the collision risk level. When the intelligent driving device travels, the collision risk level is determined based on an actual situation, and then the intelligent driving device is controlled based on the collision risk level.

According to the control method provided in this embodiment of this application, the collision risk level may be determined based on the vehicle door opening status and/or the detection result of the driver or passenger at the vehicle door, and then the intelligent driving device is controlled based on the collision risk level. This helps improve safety of the intelligent driving device and driving or riding experience of a user of the intelligent driving device.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The foregoing describes in detail the control method provided in embodiments of this application with reference to FIG. 1 to FIG. 10. The following describes in detail apparatuses provided in embodiments of this application with reference to FIG. 11 and FIG. 12. It should be understood that descriptions of apparatus embodiments correspond to the descriptions of the method embodiments. Therefore, for content that is not described in detail, refer to the method embodiments. For brevity, details are not described herein.

FIG. 11 is a block diagram of a control apparatus 2000 according to an embodiment of this application. The apparatus 2000 may include units configured to perform the methods in FIG. 5, FIG. 6, FIG. 8, and FIG. 10. In addition, the units in the apparatus 2000 are configured to implement corresponding procedures in the foregoing method embodiments. The apparatus 2000 includes an obtaining unit 2010. The obtaining unit 2010 may be configured to implement a corresponding data obtaining or receiving/sending function. The apparatus 2000 further includes a processing unit 2020. The processing unit 2020 may be configured to implement a corresponding processing function.

Optionally, the apparatus 2000 may further include a storage unit, the storage unit may be configured to store instructions and/or data, and the processing unit 2020 may read the instructions and/or the data in the storage unit, so that the apparatus implements actions in the foregoing method embodiments.

It should be understood that a specific process in which the units perform the foregoing corresponding steps is described in detail in the foregoing method embodiments. For brevity, details are not described herein.

It should be understood that the apparatus 2000 herein is embodied in a form of a functional unit. The term "module" or "unit" herein may refer to an application-specific integrated circuit ASIC, an electronic circuit, a processor (for example, a shared processor, a dedicated processor, or a group processor) configured to execute one or more software or firmware programs, a memory, a merged logic circuit, and/or another appropriate assembly that supports the described function.

The apparatus in the foregoing solutions has a function of implementing corresponding steps performed by the computing platform 350 in the foregoing methods. The function may be implemented by hardware, or may be implemented by hardware by executing corresponding software. The hardware or software includes one or more modules corresponding to the foregoing functions. For example, the obtaining unit 2010 may be replaced with a transceiver, and another unit like a processing unit may be replaced with a processor and is configured to perform related processing-operations in the method embodiments.

For example, the obtaining unit 2010 and the processing unit 2020 may be disposed in the intelligent driving device 300 shown in FIG. 3, or may be disposed in the system shown in FIG. 4. More specifically, the obtaining unit 2010 and the processing unit 2020 may be disposed in the planning and control module 420. For example, operations performed by the obtaining unit 2010 and the processing unit 2020 may be performed by one processor, or may be performed by different processors. In a specific implementation process, the one or more processors may be a processor disposed in the intelligent driving device 300 shown in FIG. 3. Alternatively, the apparatus 2000 may be a chip disposed in the intelligent driving device 300.

In a specific implementation process, all or a part of the units in the foregoing apparatus may be integrated together, or may be implemented independently. In an implementation, these units are integrated together and implemented in a form of a system-on-a-chip (system-on-a-chip, SoC).

FIG. 12 is another block diagram of a control apparatus according to an embodiment of this application. A control apparatus 2100 shown in FIG. 12 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

An embodiment of this application further provides an intelligent driving device. The intelligent driving device includes the control apparatus 2000 or the control apparatus 2100 in the foregoing embodiments.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish between different described objects, and do not limit a location, a sequence, a priority, a quantity, content, or the like of the described objects. In embodiments of this application, use of a prefix word, for example, an ordinal number, used to distinguish between the described objects does not constitute a limitation on the described objects. For descriptions of the described objects, refer to the descriptions of the context in the claims or embodiments. The use of such a prefix word should not constitute a redundant limitation.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The units described as separate components may or may not be physically separate, and components displayed as units may or may not be physical units, and may be located at one location, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, applied to an intelligent driving device, and comprising:
obtaining location information and vehicle door information of a target vehicle, wherein the vehicle door information indicates at least one of the following: opening duration of a target vehicle door of the target vehicle or a detection result of a driver or passenger at the target vehicle door, wherein
the target vehicle door is located on a side that is of the target vehicle and that is close to the intelligent driving device; and
controlling, based on the location information and the vehicle door information, a lateral offset of the intelligent driving device in a direction away from the target vehicle door, and/or a longitudinal velocity of the intelligent driving device.

2. The method according to claim 1, wherein controlling, based on the location information and the vehicle door information, the lateral offset of the intelligent driving device in the direction away from the target vehicle door comprises:
determining a lateral distance between the target vehicle and the intelligent driving device based on the location information; and
when the lateral distance is less than or equal to a first distance threshold, performing any one of the following:
when the opening duration of the target vehicle door is greater than or equal to a first duration threshold, controlling the intelligent driving device to offset by a first lateral offset;
when the opening duration of the target vehicle door is less than the first duration threshold, controlling the intelligent driving device to offset by a second lateral offset;
when a driver or passenger is detected at the target vehicle door, controlling the intelligent driving device to offset by a third lateral offset; or
when no driver or passenger is detected at the target vehicle door, controlling the intelligent driving device to offset by a fourth lateral offset, wherein
the second lateral offset is greater than the first lateral offset, and the third lateral offset is greater than the fourth lateral offset.

3. The method according to claim 2, wherein the target vehicle is located diagonally ahead of the intelligent driving device.

4. The method according to any one of claims 1 to 3, wherein the method further comprises:
obtaining information about an obstacle on a side that is of the intelligent driving device and that is away from the target vehicle door; and
controlling, based on the location information and the vehicle door information, the lateral offset of the intelligent driving device in the direction away from the target vehicle door comprises:
controlling the lateral offset based on the information about the obstacle, the location information, and the vehicle door information.

5. The method according to any one of claims 1 to 4, wherein controlling, based on the location information and the vehicle door information, the longitudinal velocity of the intelligent driving device comprises at least one of the following:
when the opening duration of the target vehicle door is greater than or equal to the first duration threshold, controlling the intelligent driving device to travel at a first longitudinal deceleration or a first velocity;
when the opening duration of the target vehicle door is less than the first duration threshold, controlling the intelligent driving device to travel at a second longitudinal deceleration or a second velocity;
when a driver or passenger is detected at the target vehicle door, controlling the intelligent driving device to travel at a third longitudinal deceleration or a third velocity; or
when no driver or passenger is detected at the target vehicle door, controlling the intelligent driving device to travel at a fourth longitudinal deceleration or a fourth velocity, wherein
the second longitudinal deceleration is greater than the first longitudinal deceleration, the third longitudinal deceleration is greater than the fourth longitudinal deceleration, the second velocity is less than the first velocity, and the third velocity is less than the fourth velocity.

6. The method according to any one of claims 1 to 5, wherein controlling, based on the location information and the vehicle door information, the longitudinal velocity of the intelligent driving device comprises:
when there is an obstacle on the side that is of the intelligent driving device and that is away from the target vehicle door, controlling the intelligent driving device to travel at a fifth longitudinal deceleration or a fifth velocity; or
when there is no obstacle on the side that is of the intelligent driving device and that is away from the target vehicle door, controlling the intelligent driving device to travel at a sixth longitudinal deceleration or a sixth velocity, wherein
the fifth longitudinal deceleration is greater than the sixth longitudinal deceleration, and the fifth velocity is less than the sixth velocity.

7. The method according to any one of claims 1 to 6, wherein the method further comprises:
controlling a prompt apparatus to prompt at least one of the following:
opening of the target vehicle door;
the detection result; or
an obstacle avoidance path, wherein the obstacle avoidance path is determined based on the lateral offset and the longitudinal velocity.

8. A control apparatus, comprising:
an obtaining unit, configured to obtain location information and vehicle door information of a target vehicle, wherein the vehicle door information indicates at least one of the following: opening duration of a target vehicle door of the target vehicle or a detection result of a driver or passenger at the target vehicle door, wherein
the target vehicle door is located on a side that is of the target vehicle and that is close to the intelligent driving device; and
a processing unit, configured to: control, based on the location information and the vehicle door information, a lateral offset of the intelligent driving device in a direction away from the target vehicle door, and/or a longitudinal velocity of the intelligent driving device.

9. The apparatus according to claim 8, wherein the processing unit is configured to:
determine a lateral distance between the target vehicle and the intelligent driving device based on the location information; and
when the lateral distance is less than or equal to a first distance threshold, perform any one of the following:
when a opening duration of the target vehicle door is greater than or equal to a first duration threshold, controlling the intelligent driving device to offset by a first lateral offset;
when the opening duration of the target vehicle door is less than the first duration threshold, controlling the intelligent driving device to offset by a second lateral offset;
when a driver or passenger is detected at the target vehicle door, controlling the intelligent driving device to offset by a third lateral offset; or
when no driver or passenger is detected at the target vehicle door, controlling the intelligent driving device to offset by a fourth lateral offset, wherein
the second lateral offset is greater than the first lateral offset, and the third lateral offset is greater than the fourth lateral offset.

10. The apparatus according to claim 9, wherein the target vehicle is located diagonally ahead of the intelligent driving device.

11. The apparatus according to any one of claims 8 to 10, wherein the obtaining unit is further configured to:
obtain information about an obstacle on a side that is of the intelligent driving device and that is away from the target vehicle door; and
the processing unit is configured to:
control the lateral offset based on the information about the obstacle, the location information, and the vehicle door information.

12. The apparatus according to any one of claims 8 to 11, wherein the processing unit is further configured to perform at least one of the following:
when a opening duration of the target vehicle door is greater than or equal to the first duration threshold, control the intelligent driving device to travel at a first longitudinal deceleration or a first velocity;
when the opening duration of the target vehicle door is less than the first duration threshold, control the intelligent driving device to travel at a second longitudinal deceleration or a second velocity;
when a driver or passenger is detected at the target vehicle door, control the intelligent driving device to travel at a third longitudinal deceleration or a third velocity; or
when no driver or passenger is detected at the target vehicle door, control the intelligent driving device to travel at a fourth longitudinal deceleration or a fourth velocity, wherein
the second longitudinal deceleration is greater than the first longitudinal deceleration, the third longitudinal deceleration is greater than the fourth longitudinal deceleration, the second velocity is less than the first velocity, and the third velocity is less than the fourth velocity.

13. The apparatus according to any one of claims 8 to 12, wherein the processing unit is configured to:
when there is the obstacle on the side that is of the intelligent driving device and that is away from the target vehicle door, control the intelligent driving device to travel at a fifth longitudinal deceleration or a fifth velocity; or
when there is no obstacle on the side that is of the intelligent driving device and that is away from the target vehicle door, control the intelligent driving device to travel at a sixth longitudinal deceleration or a sixth velocity, wherein
the fifth longitudinal deceleration is greater than the sixth longitudinal deceleration, and the fifth velocity is less than the sixth velocity.

14. The apparatus according to any one of claims 8 to 13, wherein the processing unit is further configured to:
control a prompt apparatus to prompt at least one of the following:
opening of the target vehicle door;
the detection result; or
an obstacle avoidance path, wherein the obstacle avoidance path is determined based on the lateral offset and the longitudinal velocity.

15. A control apparatus, comprising:
a processor, configured to execute a computer program stored in a memory, to enable the apparatus to perform the method according to any one of claims 1 to 7.

16. The apparatus according to claim 15, wherein the apparatus further comprises the memory.

17. An intelligent driving device, comprising the apparatus according to any one of claims 8 to 16.

18. A computer-readable storage medium, wherein the computer-readable storage medium stores instructions, and when the instructions are executed by a processor, the method according to any one of claims 1 to 7 is implemented.

19. A computer program product, wherein the computer program product comprises computer program code, and when the computer program code is run, the method according to any one of claims 1 to 7 is implemented.

20. A chip, wherein the chip comprises a circuit, and the circuit is configured to perform the method according to any one of claims 1 to 7.
